# DEMANDE DE BREVET EUROPEEN

(11) **EP 1 816 105 A1**
(43) Date de publication de la demande: **08.08.2007**
(21) Numéro de dépôt: 04791379.3
(22) Date de dépôt: 21.10.2004
(51) Int. Cl.: C02F 1/24, C02F 1/52, C02F 1/28, C02F 11/14

(54) **PROCEDE ET REACTIF DE TRAITEMENT D'EAUX RESIDUELLES INDUSTRIELLES**

(71) Demandeur: Ecotwist, S.L., Terrassa - Barcelona (ES); Mathias Bruns, Marcos, 28001 Madrid (ES)
(72) Inventeur: MELERO TALAVERA, Sergi, E-28001 Madrid (ES); SIMON POLO, Albert, E-28001 Madrid (ES); MATHIAS BRUNS, Marcos, E-28001 Madrid (ES)
(74) Mandataire: Isern-Jara, Jaime
(86) Numéro de dépôt international: PCT/ES2004/000460
(87) Numéro de publication internationale: WO 2006/045857

(57) **Abrégé**

Procédé et réactif pour le traitement des eaux résiduelles industrielles **caractérisés par** ce qu'un réactif de coagulation/adsorption, qu'il est possible de régénérer thermiquement de façon partielle, est ajouté dans le réacteur de coagulation, ce qui permet d'obtenir de l'eau débarrassée de la matière organique dans une proportion minimum de 99%, au moyen d'un procédé de coagulation-adsorption de matière organique en une seule étape, de façon directe et sans avoir besoin d'utiliser des décanteurs lamellaires ou statiques, cette eau étant réutilisable dans des procédés industriels après séparation des boues par processus d'ultrafiltration de membrane dans une proportion de débit de 90 à 95% par rapport au débit d'entrée et sans avoir besoin d'ajouter de polyélectrolyte. Cela permet aussi la recirculation directe des boues d'une partie du rejet, avec la diminution consécutive de l'infrastructure en ce qui concerne les canalisations, les pompes, ouvrage de génie civil, les vannes, la dimension des réacteurs, la consommation d'énergie, etc.

Cette méthode est applicable à des eaux industrielles de dégraissage, de cabines de peinture, nettoyage de réacteurs, etc., en fait à des eaux chargées de composés organiques tels que détergents, pigments, colorants, adoucissants, solvants, hydrocarbures, alcools, etc.

## Description

### CHAMP D'APPLICATION DE L'INVENTION

Cette invention se réfère à un procédé pour le traitement des eaux résiduelles industrielles se basant sur un réactif de coagulation/adsorption qui permet de séparer la matière organique présente dans les eaux résiduelles industrielles, avec une efficacité >99% de séparation de la matière organique. Cette méthode est applicable à des eaux résiduelles industrielles chargées de composés organiques comme détergents, pigments, colorants, adoucissants, solvants, hydrocarbures, alcools, etc.

Les eaux résultant du traitement proposé sont parfaites pour être réutilisées directement dans des procédés industriels, et non destinées à une utilisation d'eau potable.

### ÉTAT ACTUEL DE LA TECHNIQUE

Actuellement, le traitement des eaux résiduelles industrielles est effectué au moyen de traitements physico-chimiques ou biologiques.

Pour les résidus traités dans des stations physico-chimiques, le traitement consiste à acheminer l'eau industrielle depuis le bassin d'homogénéisation, où elles sont recueillies, vers le réservoir de traitement ou réacteur. À ce niveau-là, on ajoute un coagulant primaire du type Al₂(SO₄), FeCl₃, Fe₂(SO₄), AlCl₃, etc., ensuite du lait de chaux (solution liquide de CaO), le tout est agité et le pH est corrigé en ajoutant du NaOH ou HCl selon le cas. Après la neutralisation, un agent floculant, connu sous le nom de polyélectrolyte, est ajouté dans une seconde chambre, le tout est agité et la matière organique, coagulée après l'addition du coagulant, se transforme en flocs de taille suffisante qui sédimentent dans des décanteurs statiques ou lamellaires dans lesquels l'eau, débarrassée de la matière organique colloïde mais pas de la matière organique dissoute et qui n'est donc pas appropriée pour une utilisation industrielle, sort par la partie supérieure du décanteur vers le collecteur, et les boues, recueillies dans la partie inférieure du décanteur, sont épaissies et déshydratées au moyen d'un filtre presse et d'addition de lait de chaux. L'eau obtenue au moyen de ces procédés contient encore de la matière organique dissoute (qui n'est pas coagulable), ce qui à ce stade donne en fait une eau qui n'est pas appropriée pour l'utilisation industrielle.

Dans le cas des procédés biologiques, le procédé appliqué normalement aux eaux industrielles est, lors d'une première étape, un dégrossissage au moyen de grilles et de tamis pour séparer tous les solides de plus de 0,8 cm environ.
Après le dégrossissage des gros éléments et des éléments fins, un dessablage et un dégraissage sont mis en oeuvre pour séparer les sables et les graisses. Ensuite, les eaux résiduelles sont acheminées vers un décanteur primaire où la matière organique colloïde est séparée des eaux. Après cette décantation primaire, les eaux sont acheminées vers un réacteur biologique aéré, dans lequel s'effectue la digestion de la matière organique par les bactéries présentes dans l'eau. L'eau sort du réacteur biologique pour être acheminée vers un décanteur secondaire où les boues biologiques sont séparées de l'eau. L'eau de sortie, dès lors épurée mais pas appropriée pour une utilisation industrielle, est versée dans le collecteur. Les boues procédant de cette étape et celles procédant de la décantation primaire sont soumises à épaississement, digestion anaérobie pour la production de méthane, déshydratation postérieure au moyen d'un dosage de lait de chaux et séchage au moyen d'un filtre presse ou au moyen d'un dosage de polyélectrolyte cationique et centrifuge.

Dans les deux cas, l'eau de sortie n'est pas réexploitable directement pour une utilisation industrielle car aucun des deux systèmes n'est capable de séparer complètement toute la matière organique des eaux résiduelles industrielles.

### DESCRIPTION DÉTAILLÉE DE L'INVENTION

L'objet de cette invention est de fournir un procédé et un réactif pour le traitement des eaux résiduelles industrielles se basant sur un réactif de coagulation/adsorption qui permet de séparer la matière organique présente dans les eaux résiduelles industrielles avec une efficacité supérieure à 99% de séparation de matière organique, et de pouvoir réutiliser directement dans des procédés industriels les eaux résultantes de ce procédé.

### Description du procédé

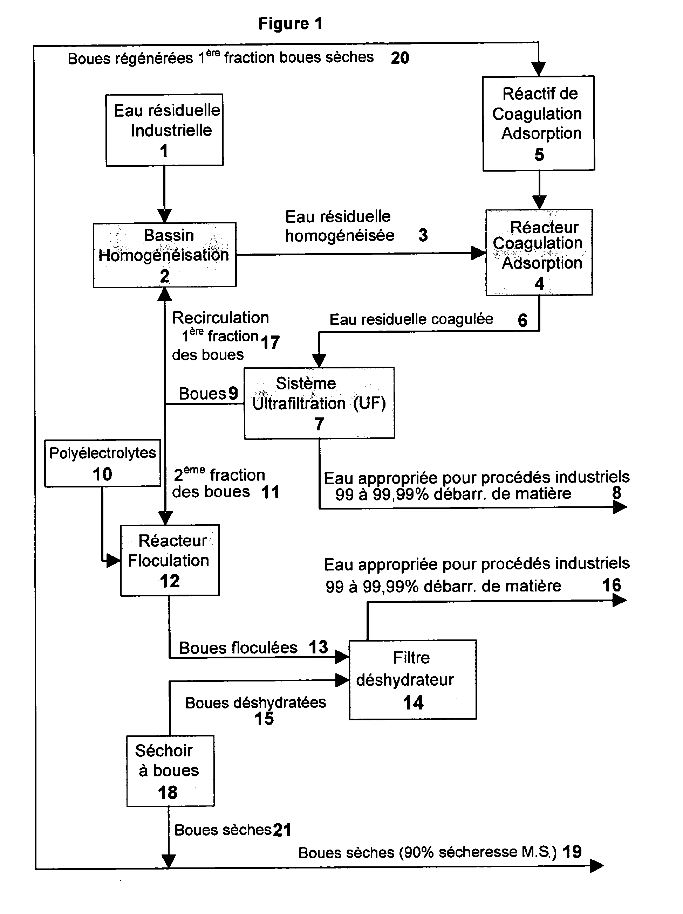

Le procédé à suivre est détaillé dans la figure 1 et consiste comme suit.

Les eaux industrielles (1) sont recueillies dans des bassins d'homogénéisation (2) dotés d'aération et d'agitation. Les bassins (2) sont compartimentés en deux parties rectangulaires et égales, de façon à ce qu'une partie du bassin soit dotée d'aération et l'autre seulement d'agitation. Les deux compartiments communiquent entre eux au moyen de fenêtres inférieures où des agitateurs immergés permettent le passage de l'eau depuis le bassin agité (anoxique) vers l'aéré (oxique).

L'aération peut être effectuée au moyen d'une grille de diffuseurs à membrane à bulle fine (tubulaires ou à disque), au moyen de pompes immergées à effet venturi ou bien d'autres systèmes d'aération. Le temps de retenue des eaux dans le bassin d'homogénéisation doit osciller entre 12 et 144 h et leur aération est déterminée par un senseur de O₂ qui règle l'apport en O₂ dans le bassin d'homogénéisation, de façon à le maintenir entre les valeurs 1,2 et 1,7 ppm de O₂ dans la zone oxique et ≤ 0,1 ppm de O₂ dans la zone anoxique.

Les bassins (2) sont dotés de systèmes de chauffage des eaux (1) qui permettent de maintenir leur température constante entre 15 °C ≤ T≤ 45 °C.

Le fait de travailler avec des bassins aérés et chauffés, et aussi de travailler avec des temps de retenue des eaux entre 12 et 144 h, permet que la flore bactérienne du bassin transforme un pourcentage de 5 ≤ % ≤ 75 de matière organique en CO₂ + H₂O + N₂.

Depuis le bassin d'homogénéisation (2) les eaux homogénéisées (3) sont captées pour être acheminées vers un réacteur de coagulation/adsorption (4) où est dosé le réactif de coagulation /adsorption (5) faisant également l'objet de cette invention, spécifique à chaque type d'eau. Le réactif à introduire dans le réacteur de coagulation/adsorption (4) pourra être dosé individuellement pour chaque composant de ce réactif (5) et introduit simultanément ou non directement dans le réacteur (4) dans les proportions requises, ou bien un mélange préalable des composants de ce réactif (5) pourra être préparé dans les proportions requises et introduit ce réactif (5) dans le réacteur (4). En ce qui concerne la réaction, le résultat est le même, et il est identique autant si le dosage a lieu en phase liquide que s'il a lieu en phase solide.

Après avoir préparé le réactif de coagulation (solide, liquide), celui-ci est ajouté dans la proportion adéquate, déterminée au préalable au moyen d'un essai de laboratoire. Après l'addition, on procède à l'agitation du mélange eau brute + réactif de coagulation/adsorption pendant un temps oscillant entre 15 secondes et 15 minutes. Pendant ce temps, deux phénomènes se produisent: la coagulation de la matière organique colloïde grâce au coagulant primaire (faisant partie des composants du réactif de coagulation/adsorption) et l'adsorption physique de la matière organique dissoute (faisant également partie des composants du réactif de coagulation/adsorption). Les deux effets combinés permettent de séparer la matière organique présente dans les eaux à traiter dans un pourcentage supérieur à 99% p/p (pourcentage pondéral).

Par la suite, les eaux coagulées (6) sont filtrées au moyen d'un système de membranes d'ultrafiltration (UF) (7). Le système permet, en travaillant à basse pression (4 bar), de séparer deux courants de débit, l'un correspondant à 90 - 95% du courant d'entrée, le perméat (8), et l'autre à 5 - 10% du courant d'entrée, le rejet (9). Le premier (8) est déjà approprié pour sa réintroduction dans les procédés industriels à caractéristiques allant de 99 à 99,9% de pureté de l'eau débarrassée de matière organique.

Dans le but de pouvoir améliorer encore davantage le rendement de l'installation, le rejet (9) provenant du système d'ultrafiltration (UF) (7) est traité comme suit :
- une fraction (17) du rejet de l'ultrafiltration (9) retourne dans le bassin d'homogénéisation (2). La fraction de rejet qui sera recirculée vers le bassin d'homogénéisation sera celle qui permettra que la concentration totale de solides dans le bassin d'homogénéisation soit de 1.000 ppm ± 100 ppm.
- l'autre fraction (11) sera acheminée vers un réacteur de floculation (12).

Le réacteur de floculation (12) est équipé d'un système d'agitation et de dosage de polyélectrolyte (10) qui sera anionique ou cationique selon le pH des eaux coagulées auparavant. Si le pH des eaux coagulées se trouve être entre les valeurs 6 ≤ pH ≤ 13, le polyélectrolyte anionique est dosé, mais s'il se trouve être entre 2,5 ≤ pH ≤ 6, c'est le polyélectrolyte cationique qui est dosé. Le temps d'agitation nécessaire pour obtenir la floculation totale des eaux oscille entre 1 min ≤ t ≤ 15 min.

Après que la floculation se soit effectuée, le réacteur de floculation (12) décharge le mélange eau-boues (13) sur un filtre déshydrateur (14) qui permet de séparer l'eau (16) des boues (15), qui sont retenues par les pores du filtre déshydrateur.

L'eau (16) obtenue au cours du procédé de floculation est de la même qualité que celle du perméat d'ultrafiltration (8), ce qui fait que les deux courants s'uniront en une eau d'utilisation industrielle. Les deux eaux de sortie, celle d'ultrafiltration (8) et celle du filtre déshydrateur (16) ont été débarrassées de la matière organique dans un pourcentage minimum > 99%, par rapport à l'eau résiduelle industrielle (1) d'entrée dans le bassin d'homogénéisation (2).

Les boues (15) retenues dans le filtre déshydrateur (14) sont lourdes et très stables car elles contiennent des adsorbants de matière organique, et donc, après leur passage dans le filtre déshydrateur (14), la boue maintenant déshydratée (15) contient entre 40% et 80% en p/p (pourcentage pondéral) d'eau.

Dans le but de pouvoir améliorer encore davantage le rendement de l'installation, les boues (15) venant du filtre déshydrateur (14) sont traitées comme suit :

Depuis le filtre déshydrateur (14), les boues déshydratées (15) sont acheminées vers un séchoir à boues (18) où, à l'aide de vapeur à 3 bar ≤ p ≤ 5 bar, les boues sont séchées jusqu'à un degré de sécheresse > 90% M.S. (matière sèche). De ces boues sèches (21), une partie est réutilisée pour la fabrication de nouveau réactif de coagulation, les boues régénérées (20), et une autre partie est purgée du système sous forme de boues sèches (19) pouvant être utilisées pour la construction, le compostage, être déposées dans des carrières, etc. Le pourcentage des boues sèches obtenues (20) dans le séchoir et pouvant être réutilisées dans la fabrication du réactif de coagulation/adsorption (5) dépendra de la régénération thermique mise en oeuvre des adsorbants utilisés et des saturats de matière organique obtenus après le séchage, car toutes les molécules organiques adsorbées ne sont pas désorbées ou oxydées au cours du procédé de régénération thermique. C'est ainsi que des échantillons des boues sèches sont prélevés (21) et l'efficacité est vérifiée au moyen d'essais «sur place » à partir d'échantillons d'eaux fraîches du bassin d'homogénéisation (2). Sur la base des résultats de ces essais, on déterminera la fraction de boues sèches (20) qui feront partie du nouveau réactif de coagulation/adsorption (5).

### Composition du réactif de coagulation/adsorption

Le nouveau réactif de coagulation/adsorption, qui fait aussi l'objet de cette invention, est composé d'un coagulant primaire de ceux déjà connus sur le marché, que ce soit à l'état solide ou liquide, d'adsorbants de matière organique soluble et aussi d'une partie des boues provenant du séchoir ayant été régénérées thermiquement.

Ce dernier composant n'est pas indispensable au fonctionnement du réactif de coagulation/adsorption comme tel, mais il est très important pour augmenter le rendement du procédé global.

**Coagulant primaire :** sels d'aluminium ou de fer sous forme solide ou liquide. On travaillera de préférence avec FeCl₃ et/ou Fe₂(SO₄)₃ et/ou AlCl₃ et/ou Al₂(SO₄)₃, bien que d'autres puissent être utilisés également comme par exemple l'oxyde d'éthylène, etc.

**Adsorbants de matière organique soluble :** charbon actif végétal ou minéral, bentonites naturelles en poudre, zéolithes granulaires, sépiolites granulaires ou terre de diatomées en poudre. La proportion et la présence de ces composants dépendent de la qualité et de la composition des eaux brutes à traiter.

**Boues :** Avec le coagulant primaire et le mélange d'adsorbants, une partie des boues provenant du séchoir à boues est réutilisée.

La proportion de coagulant primaire, adsorbants de matière organique soluble et boues sèches sera déterminée par rapport à la proportion de matière organique colloïde et soluble dans les eaux à traiter et par rapport à la qualité des boues sèches au moyen d'un essai « sur place ».

### Exemple :

### Eaux provenant des cabines de peinture :

Les eaux de type cabines de peinture présentent une DCO de 4000 à 6000 ppm O₂ en raison des peintures dissoutes dans l'eau. Les peintures contiennent des pigments et des colorants, des coupages (molécules organiques à poids moléculaire élevé) de support pour les pigments et les solvants organiques.

Pour traiter cette eau, on dose un réactif de coagulation composé de : 3000 ppm de AlCl₃ liquide à 10%, 1000 ppm de bentonite naturelle en poudre et 1000 ppm de charbon actif végétal en poudre.

Deux procédés peuvent être utilisées pour procéder au dosage du réactif de coagulation/adsorption :

Option a : Tout d'abord, on dose AlCl₃ par rapport aux eaux résiduelles industrielles contenues dans le réacteur de coagulation/adsorption (4) et après une période d'agitation de 1 à 3 minutes, on ajoute le mélange des deux adsorbants naturels. L'agitation est maintenue pendant 5 minutes et ensuite on filtre le mélange au moyen d'un système d'ultrafiltration (7), avec un débit de perméat de 92 à 95% du débit d'entrée, obtenant ainsi une eau à DCO < 25 ppm O₂, appropriée pour une réintroduction dans les procédés industriels.

Option b: On prépare au préalable le mélange AlCl₃ + bentonite naturelle + charbon actif. Après avoir obtenu le réactif de coagulation/adsorption (5), celui-ci est dosé directement dans le réacteur de coagulation/adsorption (4) en agitant le mélange pendant 1 à 8 minutes. Le résultat final de la séparation de matière organique est identique au précédent.

Après le processus de coagulation/adsorption, le mélange obtenu est séparé en deux courants au moyen d'un système de membranes d'ultrafiltration (7), travaillant à 3 bar de pression, en deux courants: l'un des courants est de l'eau débarrassée de matière organique dans un pourcentage > 99%, le perméat (8), correspondant à 88% du mélange et l'autre, le rejet (9), correspondant à 12% du mélange.

Le rejet (9), produit de l'ultrafiltration (7), est acheminé vers le réacteur de floculation (12) où on lui ajoute un polyélectrolyte anionique à raison de 3 ppm par rapport à l'échantillon initial. Après une période d'agitation de 2 à 5 minutes, on obtient des flocs de grande taille qui sont séparés de l'eau au moyen d'un filtre déshydrateur (14) dont la taille moyenne des pores est 200 µm, les boues humides (60% de teneur en eau) et l'eau étant retenues. L'eau de sortie (16) du filtre déshydrateur (14) est acheminée, avec le perméat (8) de l'ultrafiltration, vers le réservoir d'eau industriel et les boues sont introduites dans un séchoir (18) où l'eau est séparée jusqu'à un degré de sécheresse d'environ 90 - 95% par rapport à la matière sèche.

La récupération du pouvoir adsorbant du charbon actif et la bentonite travaillant avec la vapeur à 3 bar est de 80%, de telle manière que, en ce qui concerne le lot suivant, des 1000 ppm de bentonite et 1000 ppm de charbon actif végétal en poudre, il n'y aura besoin d'ajouter que 200 ppm de bentonite naturelle fraîche en poudre et 200 ppm de charbon actif végétal frais, car le reste, soit 800 ppm de chacun des deux adsorbants, bentonite naturelle et charbon actif végétal, sera ajouté sous forme de boue régénérée thermiquement dans le séchoir.

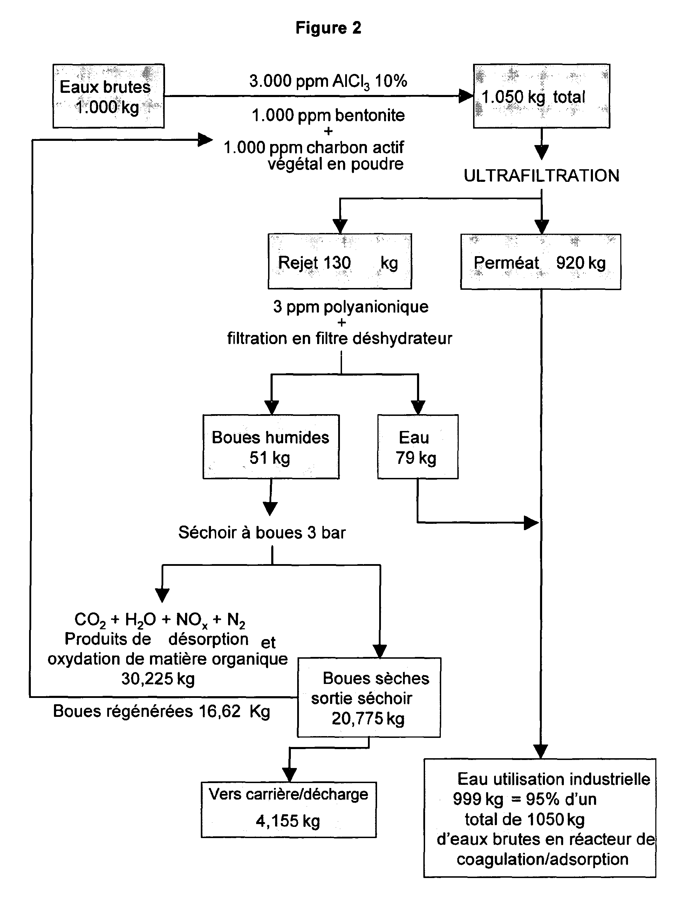

Un schéma détaillé de l'exemple est représenté dans la figure 2.

### BRÈVE DESCRIPTION DU CONTENU DES FIGURES :

La figure 1 montre, sous forme de diagramme de flux, le procédé objet de l'invention pour le traitement des eaux résiduelles industrielles.

La figure 2 montre, sous forme de diagramme de flux et pour chaque étape de l'exemple, les quantités obtenues d'eau pour une utilisation industrielle et de boues.

## Revendications

1. Procédé et réactif pour le traitement des eaux résiduelles industrielles contenant des composés organiques tels que détergents, pigments, colorants, adoucissants, solvants, hydrocarbures, alcools, etc. **caractérisés par** ce que dans le réacteur de coagulation/adsorption on ajoute un réactif de coagulation/adsorption composé, qui permet d'engendrer, directement et en une seule étape, une coagulation/adsorption de 99% minimum de la matière organique présente dans l'eau et que l'eau est appropriée pour une utilisation industrielle après avoir été séparée de la boue.

2. Procédé et réactif pour le traitement des eaux résiduelles industrielles contenant des composés organiques tels que détergents, pigments, colorants, adoucissants, solvants, hydrocarbures, alcools, etc., selon la revendication 1, **caractérisés par** ce que la séparation de l'eau et de la boue obtenue lors du processus de coagulation/adsorption est effectuée au moyen d'un sous-procédé d'ultrafiltration (UF) au travers de membranes et dans un débit de sortie d'eau, dès lors d'utilisation industrielle, de 90 à 95% par rapport au débit d'entrée.

3. Procédé et réactif pour le traitement des eaux résiduelles industrielles contenant des composés organiques tels que détergents, pigments, colorants, adoucissants, solvants, hydrocarbures, alcools, etc., selon la revendication 1, **caractérisés par** ce que le procédé et le réactif permettent d'obtenir de l'eau pour utilisation industrielle dans un pourcentage de 90 - 96% de façon directe et en une seule étape de séparation, sans avoir besoin d'ajouter de polyélectrolyte et sans avoir besoin d'utiliser des décanteurs lamellaires ou statiques.

4. Procédé et réactif pour le traitement des eaux résiduelles industrielles contenant des composés organiques tels que détergents, pigments, colorants, adoucissants, solvants, hydrocarbures, alcools, etc., selon la revendication 1, **caractérisés par** ce que le procédé permet la recirculation directe des boues d'une partie du rejet, avec la diminution résultante pour l'infrastructure quant aux canalisations, pompes, ouvrage de génie civil, vannes, dimension des réacteurs, consommation d'énergie, etc.

5. Procédé et réactif pour le traitement des eaux résiduelles industrielles contenant des composés organiques tels que détergents, pigments, colorants, adoucissants, solvants, hydrocarbures, alcools, etc., selon la revendication 1, **caractérisés par** ce que l'eau obtenue du perméat de l'ultrafiltration est appropriée pour une utilisation industrielle et stérile car la taille des pores utilisées dans une ultrafiltration ne permet pas le passage des bactéries et des virus au travers de la membrane.

6. Procédé et réactif pour le traitement des eaux résiduelles industrielles selon la revendication 1, **caractérisés par** ce que le réactif coagulant/adsorbant est composé de coagulants primaires et/ou bentonites en poudre et/ou zéolithes en poudre et/ou du charbon actif végétal ou minéral en poudre et/ou de terres de diatomées en poudre et/ou de boues sèches régénérées thermiquement.

7. Procédé et réactif pour le traitement des eaux résiduelles industrielles selon la revendication 1, **caractérisés par** l'utilisation d'un réactif de coagulation/adsorption pouvant être régénéré thermiquement.
